Europäisches Patentamt

(19) European Patent Office

Office européen des brevets

(11) Numéro de publication: **0 132 174**
**B1**

(12) **FASCICULE DE BREVET EUROPEEN**

(45) Date de publication du fascicule du brevet: 05.10.88

(51) Int. Cl.⁴: **B 01 D 50/00**

(21) Numéro de dépôt: 84401265.8

(22) Date de dépôt: 19.06.84

(54) **Appareil d'épuration de gaz, tel que l'air, contaminé par des composés huileux ou hydrocarbonés liquides dispersés dans ledit gaz.**

(30) Priorité: 29.06.83 FR 8310781

(43) Date de publication de la demande:
23.01.85 Bulletin 85/04

(45) Mention de la délivrance du brevet:
05.10.88 Bulletin 88/40

(84) Etats contractants désignés:
AT BE CH DE GB IT LI LU NL SE

(56) Documents cités:
BE-A- 519 925
FR-A-2 401 690
US-A-3 856 487

(73) Titulaire: Fläkt Aktiebolag
Sickla Allé 13
S-131 34 Nacka (SE)

(72) Inventeur: Obriot, Bernard
4 Chemin des Acacias
F-57117 Nouilly (FR)

(74) Mandataire: Portal, Gérard et al
Cabinet Z. Weinstein 20, Avenue de Friedland
F-75008 Paris (FR)

Courier Press, Leamington Spa, England.

## Description

La présente invention concerne un appareil d'épuration tel que décrit dans le préambule de la revendication principale.

Un tel appareil est connu par le brevet US N° 3 856 487. Cet appareil connu est réalisé sous forme d'un laveur de gaz. A cette fin on prévoit dans le caisson de l'appareil à différents endroits dans le chemin d'écoulement des gaz des moyens gicleurs destinés à arroser par un fluide pulvérisé les gaz s'écoulant en sens inverse, et des parties d'étranglement destinées à produire une augmentation de la vitesse d'écoulement des gaz et de leur turbulence. Des gicleurs sont prévus dans ces zones de section d'écoulement réduite. Le bas du caisson est constitué d'un réservoir concentrateur rempli de liquide et une pompe est prévue pour aspirer le liquide contenu dans le réservoir et pour alimenter les gicleurs.

Cet appareil connu a pour inconvénient d'être encombrant et de présenter une structure interne du caisson, qui est très complexe.

La présente invention a pour objectif de proposer un appareil qui présente un faible encombrement et une structure interne simple, tout en réduisant la maintenance et les frais d'exploitation à un minimum. De plus, cet appareil doit s'installer facilement, par exemple en élévation au-dessus des machines source de pollution gazeuses telles qu'elles se recontrent dans des industries employant des huiles par exemple pour l'usinage, le graissage des moules ou le refroidissement.

Pour résoudre ce problème, l'appareil selon l'invention comporte des caractéristiques énoncées dans la partie caractérisante de la revendication principale.

D'autres buts, caractéristiques et avantages de l'invention apparaîtront clairement à la lumière de la description explicative qui va suivre faite en référence aux dessins annexés dans lesquels:

La figure 1 est une vue en coupe partielle schématique d'un appareil d'épuration de gaz selon la présente invention.

La figure 2 est une vue en coupe schématique de l'appareil d'épuration de gaz selon l'invention de la figure 1, comportant en outre un système d'isolation étanche, en cas de risque d'incendie, isolant de manière étanche la chambre d'épuration du local ou de la pièce contenant le gaz et qui peut être un réacteur.

La figure 3 représente schématiquement un local ou une pièce formé par exemple par un atelier industriel comportant plusieurs appareils d'épuration selon l'invention, et schématisant le circuit fermé parcouru par le fluide caloporteur

La figure 4 représente en coupe une vue schématique de l'appareil d'épuration selon l'invention avec un dispositif de réintroduction de gaz, de préférence de l'air, dans une pièce ou local de manière à uniformiser davantage la température dans ladite pièce ou local.

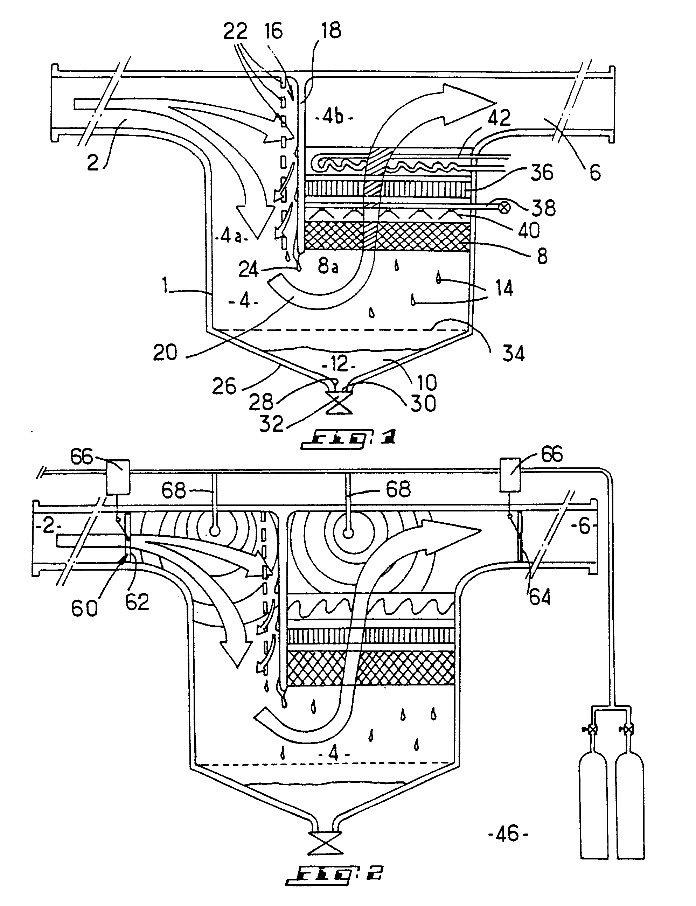

En référence à la figure 1, un appareil d'épuration de gaz, tel que de l'air, contaminé par des composés huilleux ou hydrocarbonés liquides dispersés dans celui-ci, comprend un caisson 1 pourvu d'au moins un conduit 2 d'amenée de gaz contenant les composés huilleux ou hydrocarbonés, débouchant dans une chambre 4 d'épuration et au moins un conduit 6 de sortie du gaz épuré, ladite chambre d'épuration 4 comprenant un dispositif 8 (filtre) de séparation par coalescence des vésicules de de composés huilleux ou hydrocarbonés, disposé dans le passage du gaz symbolisé par les flèches, depuis le conduit d'amenée 2 vers le conduit de sortie 6, et un réservoir 10 de collecte des composés huilleux ou hydrocarbonés 12, de manière à collecter lesdits composés retenus par le filtre 8 et chutant par gravité, comme symbolisé par les gouttes 14.

Le filtre de séparation par coalescence 8 est disposé sensiblement horizontalement et le conduit 2 d'amenée de gaz à épurer débouche latéralement dans la chambre d'épuration 4, et de préférence sensiblement parallèlement au plan général du filtre 8, comme représenté à la figure 1.

La chambre d'épuration 10 comprend un dispositif 16 de préconcentration dynamique des composés dispersés, disposé en amont du filtre 8. Ce dispositif de préconcentration 16 comprend une paroi 18 disposée de manière à former obstacle relativement au courant de gaz introduit dans la chambre d'épuration 4 et à dévier ainsi ledit gaz avant son passage dans le filtre 8, comme clairement compréhensible à partir de la figure 1.

Cette paroi 18 formant obstacle est entièrement verticale et forme une cloison séparant la chambre d'épuration 4 en deux compartiments 4a; 4b; ladite cloison 18 étant plus courte que la hauteur de ladite chambre d'épuration 4 et laissant un espace libre 20 vers le bas pour le passage du gaz comme cela est clairement visible à la figure 1.

Selon une caractéristique particulièrement préférée, représentée à la figure 1, le cloison 18 sert à la fixation d'une extrémité 8a du filtre 8.

La paroi formant obstacle 18 est pourvue de chicanes 22 sur toute sa surface, disposées en relation espacée relativement à ladite paroi formant obstacle 18. Ainsi, les chicanes 22 servent à une première coalescence des vésicules de produits huilleux ou hydrocarbonés dispersés dans le gaz, de préférence constitué par de l'air, en des gouttelettes 24 qui chutent également par gravité; lesdites chicanes 22 servant en outre à éviter une redispersion des gouttelettes 24 dans le gaz.

Le réservoir de collecte des composés huileux ou hydrocarbonés est formé par la partie inférieure de la chambre d'épuration 4, conformée de préférence en entonnoir 26 dont le fond 28 comprend une ouverture 30 fermée par une vanne 32 qui est ouverte à volonté pour évacuer les composés huilleux ou hydrocarbonés 12 collectés dans ledit réservoir 10. De préférence, une grille 34 est disposée au fond de la chambre d'épuration 4 de manière à réaliser une séparation physique entre la chambre d'épuration 4 proprement dite et le réservoir de collecte 10.

Selon encore une autre caractéristique de l'appareil selon l'invention, le filtre 8 est de préférence constitué par une pluralité de couches de tissus, notamment métalliques, avantageusement de forte épaisseur.

Etant donné que le filtre 8 peut ne pas être entièrement suffisant pour épurer totalement le gaz des produits huileux ou hydrocarbonés, l'appareil selon l'invention comprend en outre en aval du filtre 8, un filtre supplémentaire 34 réalisé en un matériau avide d'hydrocarbure, de préférence en polypropylène, disposé également horizontalement et qui piège les dernières vésicules de composés huileux ou hydrocarbonés dispersés dans le gaz.

D'autre part, et en vue de faciliter la chute des gouttelettes de composés huileux ou hydrocarbonés liquides dispersés dans le gaz, l'appareil selon l'invention comprend de préférence, en aval du filtre 8, un système de rinçage 38 dudit filtre 8, de préférence par pulvérisation, par exemple à l'aide d'une rampe d'arrosage, comme représenté, d'un produit 40 approprié tel qu'un détergent ou solvant selon les cas.

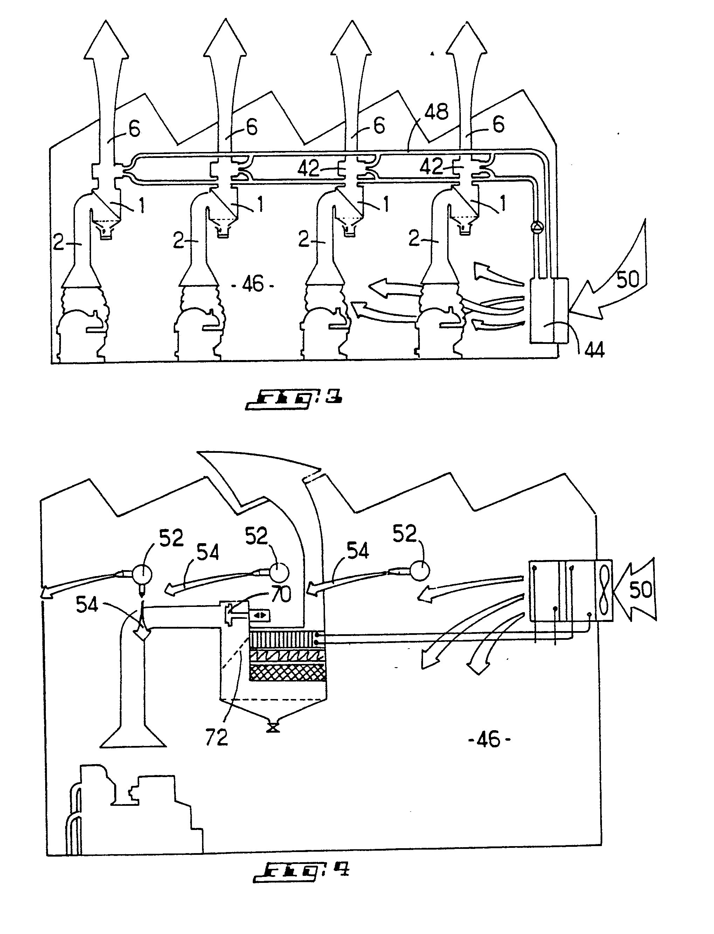

D'autre part, dans le cas de l'épuration d'un gaz relativement chaud, tel que par exemple l'air d'une pièce ou local se trouvant à une température plus élevée que la température extérieure, l'appareil selon l'invention est de préférence pourvu, vers la sortie de la chambre d'épuration 4, d'un échangeur de chaleur 42 récupérant les calories du gaz sortant de ladite chambre 4, par réchauffage d'un fluide caloporteur qui est ensuite avantageusement utilisé pour réchauffer le gaz introduit dans ladite pièce ou local par la présence d'un autre échangeur de chaleur 44, représenté à la figure 3.

On voit ainsi en référence à la figure 3 que la pièce ou local 46 peut comporter plusieurs appareils d'épuration 1 selon l'invention dont chacun est pourvu sur le conduit de sortie 6 d'un échangeur de chaleur 42 faisant partie d'un circuit fermé 48 comportant un échangeur de chaleur 44 en vue de préchauffer ici l'air 50 entrant dans le local 46 et situé à une température inférieure. Le même principe s'applique également dans le cas inverse.

On peut observer en référence à la figure 3 que lorsque la réintroduction d'air 50 est réalisée vers le bas du local 46, il se produit une certaine "stratification" de la température dans le local 46. On peut obvier à cet inconvénient en adoptant la configuration représentée à la figure 4 et selon laquelle l'air 50 est introduit dans le local 46 dans la partie haute en combinaison avec les dispositifs 52, également commercialisés par la demanderesse sous la dénomination commerciale "dirivent" et qui permettent d'introduire l'air d'admission en des courants 54 dirigés de manière à homogénéiser la température dans le local 46.

En référence à la figure 2, on a représenté un mode de réalisation également préféré de l'appareil selon l'invention, pour le cas habituel où les composés huileux ou hydrocarbonés présentent un risque d'incendie, selon lequel l'appareil selon l'invention comprend un système 60 d'isolation étanche de la chambre 4 du local 46. De préférence, ce système d'isolation 60 comprend des volets 62, 64, mobiles disposés dans les conduits d'accès et de sortie 6 susceptibles de fermer lesdits conduits 2, 6, comme représenté à la figure 2 par commande par des moyens hydrauliques, pneumatiques, électriques, ou électromagnétiques habituels dans la technique et qui seront apparents pour l'homme du métier, schématisés par le numéro de référence 66, et en combinaison de préférence avec des moyens 68 d'introduction de gaz inerte dans ladite chambre d'épuration 4, évitant tout risque d'incendie. Comme gaz inerte, on peut citer par exemple le gaz carbonique, les halogènes, etc. De tels gaz seront également apparents pour un homme du métier.

On peut également associer à l'appareil d'épuration selon l'invention tout autre dispositif de la technique. Par exemple, on peut introduire une pompe à chaleur dans le circuit 48 de la figure 3 ou encore utiliser un dispositif de variation du flux de gaz aspiré dans la chambre d'épuration représenté par le numéro de référence 70, figure 4, comme le dispositif commercialisé par la demanderesse sous la dénomination commerciale Variflow.

**Revendications**

1. Appareil d'épuration de gaz tel que l'air, pollué par des composés, huileux ou hydrocarbonés, liquides dispersés dans ledit gaz, notamment sous forme de brouillard, du type comprenant un caisson (1) comportant au moins un conduit (2) sensiblement horizontal d'amenée de gaz pollué débouchant latéralement dans une chambre d'épuration (4) et au moins un conduit (6) de sortie de gaz épuré, ladite chambre d'épuration (4) contenant, dans le passage du gaz depuis le conduit d'amenée (2) vers le conduit de sortie (6), une paroi (18) de déviation vers le bas des gaz amenés dans ladite chambre d'épuration (4) et un dispositif de séparation par filtration des produits polluants, disposé sensiblement horizontalement dans ledit passage du gaz, et une partie (10) de collecte des composés huilés ou hydrocarburés (12) séparés dudit gaz et tombant dans celui-ci par gravité, cette partie étant prévue dans le fond de ladite chambre d'épuration en laissant un passage des gaz déviés au dispositif de séparation en-dessous de ladite paroi (18), caractérisé en ce que la paroi de déviation (18) est entièrement verticale et pourvue d'un dispositif à chicane (22) disposé en amont de la face de déviation de la paroi, et sur toute son étendue, et en ce que le dispositif de séparation comprend un premier filtre (8) de séparation par coalescence des vésicules de produits huilés ou hydrocarbonés en gouttelettes (14), tel que constitué par une pluralité de couches de tissus métalliques, et, en aval de ce premier filtre, un filtre supplémentaire (36) réalisé en un matériau de fixation d'hydrocarbures tel que du polypropylène.

2. Appareil selon la revendication 1, à système (38) de rinçage du premier filtre (8) de séparation par coalescence, caractérisé en ce que le système (38) de rinçage du premier filtre (8) est disposé en aval de ce dernier et agit de préférence par pulvérisation d'un produit approprié (40) tel qu'un détergent ou solvant.

3. Appareil selon l'une quelconque des revendications précédentes, caractérisé en ce que vers la sortie de la chambre d'épuration (4) est disposé un échangeur de chaleur (42) récupérant la chaleur du gaz sortant de ladite chambre d'épuration (4) par réchauffage d'un fluide réfrigérant.

4. Appareil selon l'une quelconque des revendications précédentes, caractérisé en ce qu'il comprend un système (60) d'isolation étanche de la chambre d'épuration (4).

5. Appareil selon la revendication 4, caractérisé en ce que le système d'isolation étanche (60) comprend des volets (62, 64) mobiles, disposés dans les conduits d'accès (2) et de sortie (6), susceptibles de fermer lesdits conduits (2, 6); et de préférence des moyens (68) d'introduction de gaz inerte dans ladite chambre (4), évitant tout risque d'incendie.

## Patentansprüche

1. Vorrichtung zur Reinigung eines Gases wie Luft, verunreinigt mit flüssigen ölartigen Verbindungen oder mit flüssigen Kohlenwasserstoffen, die insbesondere als Nebel im besagten Gas dispersiert sind, der Gattung, die einen Caisson (1) aufweist, der wenigstens eine im wesentlichen waagerechte Zufuhrleitung (2) für das verschmutzte Gas, die seitlich in eine Reinigungskammer (4) einmündet und wenigstens eine Auslaßleitung (6) für das gereinigte Gas aufweist, wobei die besagte Reinigungskammer (4), im Durchgang des Gases von der Zufuhrleitung (2) in Richtung auf die Auslaßleitung (6), eine Wand (18) zur Abwärtsablenkung der in die besagte Reinigungskammer (4) gebrachten Gase und eine Vorrichtung zur Trennung der verschmutzenden Produkte, die im besagten Durchgang des Gases im wesentlichen waagerecht angeordnet ist, durch Filtration, und ein Teil (10) zur Sammlung der vom besagten Gas getrennten ölartigen Verbindungen oder Kohlenwasserstoffen (12), die in dieses Teil durch Schwerkraft fallen, enthält, wobei dieses Teil im unteren Teil der besagten Reinigungskammer angeordnet ist, in dem ein Durchgang der abgelegten Gase zur Trennungsvorrichtung unterhalb der besagten Wand (18) vorgesehen ist, dadurch gekennzeichnet, daß die Ablenkungswand (18) völlig senkrecht und mit einer Schikanenvorrichtung (22) versehen ist, die aufwärts von der Ablenkungsseite der Wand und entlang deren ganzen Höhe angeordnet ist, daß die Trennungsvorrichtung einen ersten Filter (8) zur Trennung durch Koaleszenz der Bläschen von ölartigen Produkten oder der Kohlenwasserstoffe als Tröpfchen (14), der von einer Mehrkeit von Drahtgewebeschichten gebildet ist, und, abwärts von diesem ersten Filter, einen zusätzlichen Filter (36) aus einem Material zur Anlagerung von Kohlenwasserstoffen wie Polypropylän aufweist.

2. Vorrichtung nach Anspruch 1, mit einem System (38) zur Spülung des ersten Trennungsfilters (8) durch Koaleszenz, dadurch gekennzeichnet, daß das System (38) zur Spülung der ersten Filters (8) sich abwärts von diesem Filter befindet und vorzugsweise durch Zerstäubung eines angepaßten Produkts (40) wie einem Detergent oder einem Lösungsmittel arbeitet.

3. Vorrichtung nach einem der vorangehenden Ansprüche, dadurch gekennzeichnet, daß in Richtung auf den Auslaß der Reinigungskammer (4) ein Wärmeaustauscher (42) angeordnet ist, der die Wärme des die besagte Reinigungskammer (4) verlassenden Gases durch Erhitzung eines flüssigen Kühlmittels rückgewinnt.

4. Vorrichtung nach einem der vorangehenden Ansprüche, dadurch gekennzeichnet, daß sie ein System (60) zur dichten Isolierung der Reinigungskammer (4) aufweist.

5. Vorrichtung nach Anspruch 4, dadurch gekennzeichnet, daß das System zur dichten Isolierung (60) in den Zufuhr- (2) und Auslaß- (6) leitungen angeordnete bewegliche Klappen (62, 64) aufweist, die fähig sind, die besagten Leitungen (2, 6) zu schließen, und vorzugsweise Mittel (68) zur Zuführung eines inerten Gases in die besagte Kammer (4), wodurch eine Brandgefahr vermieden wird, aufweist.

## Claims

1. Apparatus for purifying a gas, such as air, contaminated by oily or hydrocarbonic liquid compounds dispersed in the said gas, in particular in the form of mist, of the type comprising a caisson (1) comprising at least one substantially horizontal inlet pipe (2) for the contaminated gas laterally opening into a purification chamber (4) and at least one outlet pipe (6) for the purified gas, the said purification chamber (4) containing, in the flow path of the gas from the inlet pipe (2) towards the outlet pipe (6), a wall (18) for the downward deflection of the gases brought into the said purification chamber (4) and a device for separating the contaminating products by filtration, disposed substantially horizontally in the said flow path of the gas, and a part (10) for collecting the oily or hydrocarbonic compounds (12) separated from the said gas and falling into this part by gravity, the said part being provided in the bottom of the said purification chamber and leaving a flow path of the deflected gases towards the separation device below the said wall (18), characterized in that the deflection wall (18) is entirely vertical and provided with a baffle device (22) disposed upstream of the deflection side of the wall, and over its whole height, and in that the separation device comprises a first filter (8) for separating by coalescence vesicles of oily or hydrocarbonic products into droplets (14), such as formed of a plurality of metallic cloth layers, and, downstream of this first filter, an additional filter (36) made of a material for fixing the hydrocarbons such as polypropylene.

2. Apparatus according to claim 1, with a system (38) for rinsing the first coalescence separation filter (8), characterized in that the system (38) for rinsing the first filter (8) is disposed downstream of the latter and operates preferably by spraying an appropriate product (40) such as a detergent or solvent.

3. Apparatus according to any of the preceding claims, characterized in that a heat exchanger (42) is disposed towards the outlet of the purification chamber (4), which exchanger recovers the heat from the gas leaving the said purification chamber (4) by heating a refrigerating medium.

4. Apparatus according to any of the preceding claims, characterized in that it comprises a system (60) for tightly insulating the purification chamber (4).

5. Apparatus according to claim 4, characterized in that the tight insulation system (60) comprises movable shutters (62, 64), disposed inside the inlet (2) and outlet (6) pipes, likely to shut the said pipes (2, 6); and preferably means (68) for introducing inert gas inside the said chamber (4), avoiding any risk of fire.

**0 132 174**

Fig.1

Fig.2

_FIG: 3_

_FIG: 4_